# EUROPÄISCHE PATENTSCHRIFT

(11) **EP 4 082 750 B1**
(45) Veröffentlichungstag und Bekanntmachung des Hinweises auf die Patenterteilung: **01.11.2023**
(21) Anmeldenummer: 21171204.7
(22) Anmeldetag: 29.04.2021
(51) Int. Cl.: B29C 49/42, B29C 49/06, B29K 67/00, B29L 31/00, F16K 31/122

(54) **VORRICHTUNG EINER BLASEINRICHTUNG**
FIXTURE OF A BLOWING DEVICE
DISPOSITIF D'UN SYSTÈME DE SOUFFLAGE

(43) Veröffentlichungstag der Anmeldung: 02.11.2022
(73) Patentinhaber: Eugen Seitz AG, 8623 Wetzikon (CH)
(72) Erfinder: SCHMIDT, Joachim, 8442 Hettlingen (CH); SCHNETZER, Roland, 8274 Tägerwilen (CH)
(74) Vertreter: Clerc, Natalia

(56) Entgegenhaltungen:
- EP-A1- 2 402 143
- EP-A1- 3 530 431
- WO-A1-2012/034953
- US-B2- 7 927 093

## Beschreibung

### TECHNISCHES GEBIET

Die vorliegende Erfindung betrifft eine Vorrichtung einer Blaseinrichtung zur Formung von Hohlkörpern, insbesondere einer Streckblasmaschine. Die Vorrichtung ist insbesondere eine Ventileinheit.

### STAND DER TECHNIK

Blaseinrichtungen bzw. Blasmaschinen zur Formung von Hohlkörpern sind hinreichend aus dem Stand der Technik bekannt. Üblicherweise wird ein vortemperierter Vorformling aus einem thermoplastischen Kunststoff, vorzugsweise aus Polyethylenterephtalat (PET), mit einer Blasdüse der Blasmaschine verbunden. Durch Einblasen eines Prozessgases, vorzugsweise Druckluft, wird er geweitet. Durch Verwendung von Blasformen lässt sich die gewünschte Form erzielen. Je nach Verfahren wird nur geblasen oder der Rohling, d.h. der Vorformling, wird zudem während des Blasens mittels eines verschiebbaren Dorns bzw. einer verschiebbaren Reckstange, gestreckt. Dieses zweite Verfahren wird Streckblasen genannt.

Das Einblasen des Prozessgases erfolgt üblicherweise über zwei oder mehr Stufen. Das Vorblasen findet bei einem tieferen Druck statt als das nachfolgende Hauptblasen. Bei der Entlüftung des Hohlkörpers nach dem Blasprozess wird das Prozessgas, insbesondere Druckluft, rückgewonnen und/oder nach aussen geführt.

Die einzelnen Blasschritte wie auch das Entlüften werden mittels Ventilen gesteuert. Die Herstellung bzw. Formung derartiger Hohlkörper mittels Blasmaschinen erfolgt innerhalb weniger Sekunden, vorzugsweise innerhalb von 1 bis 3 s. Die Fluidverbindungen zwischen den Ventilen und der Blasdüse sollten somit möglichst kurz und Toträume sollten möglichst minimiert sein.

WO 02/34500 offenbart eine Blasmaschine mit einer kompakten Ventileinheit, die einen Gehäuseblock zur Aufnahme der Blasdüse und mehrere daran angeordnete Ventile aufweist. Die Blasluftkanäle verlaufen im Gehäuseblock.

US 7 674 108 B2 offenbart eine Blasmaschine mit einer Ventileinheit, bei der die Ventile in Form von Kartuschen in den Gehäuseblock eingebracht sind. Dies soll die Fluidverbindungen kurz halten und das Auswechseln der Ventile erleichtern.

US 7 927 093 B2 schlägt vor, alle Prozessventile gemeinsam in einem einzigen Gehäuse auf einer Seite des Gehäuseblocks anzuordnen und auf der gegenüberliegenden Seite des Gehäuseblocks ein zweites Gehäuse anzubringen, in welchem sämtliche Zuführungskanäle und der Entlüftungskanal für die Prozessluft verlaufen. Das zweite Gehäuse schafft die Verbindungen zwischen externen Leitungen und den im Gehäuseblock verlaufenden Kanälen.

### DARSTELLUNG DER ERFINDUNG

Es ist deshalb eine Aufgabe der Erfindung, eine Vorrichtung für eine Blaseinrichtung zu schaffen, die eine möglichst kompakte Anordnung der Ventile erlaubt, wobei die Ventile trotzdem einfach auswechselbar sind.

Diese Aufgabe löst eine Vorrichtung mit den Merkmalen des Patentanspruchs 1 sowie eine Ventileinrichtung mit den Merkmalen des Patentanspruchs 15.

Die erfindungsgemässe Vorrichtung einer Blaseinrichtung zur Formung von Hohlkörpern, insbesondere einer Streckblasmaschine, weist auf:
- einen Gehäuseblock mit einer Durchgangsbohrung zur mindestens teilweisen Aufnahme einer mit dem Hohlkörper verbindbaren Blasdüse der Blaseinrichtung,
- mindestens ein Ventil mit einem bewegbaren Kolben und mit einem Ventilraum,
- einen ersten Kanal, der im Gehäuseblock verläuft und der den Ventilraum mit der Durchgangsbohrung verbindet,
- einen zweiten Kanal, der den Ventilraum mit einer externen Leitung verbindet und
- einen Deckel zur Befestigung des Ventils am Gehäuseblock.

Das Ventil verbindet den ersten und den zweiten Kanal miteinander und trennt sie voneinander.

Erfindungsgemäss verläuft der zweite Kanal mindestens teilweise im Deckel und/oder mindestens ein Teil des Ventilraums ist im Deckel angeordnet und umgibt den Kolben.

Der Ventilraum ist derjenige Raum, in den der erste Kanal und der zweite Kanal münden und der durch den Kolben begrenzt ist. Er ist bei offenem Ventil mit Prozessdruck beaufschlagt. Beim Schliessen des Ventils bewegt sich die freie Stirnfläche des Kolbens in den Ventilraum hinein. Bei geschlossenem Ventil ragt der Kolben mindestens so weit in den Ventilraum hinein, dass er die Verbindung zwischen den zwei Kanälen unterbricht.

Vorzugsweise sind mehrere Ventile und mehrere erste und zweite Kanäle vorhanden. Je nach Ausführungsform sind alle Ventile einem einzigen Deckel zugeordnet. In alternativen Ausführungsformen sind zwei oder mehr Ventile einem gemeinsamen Deckel zugeordnet und/oder einzelne Ventile sind jedes einem eigenen Deckel zugeordnet. Die Vorrichtung weist je nach Ausführungsform mehrere Deckel auf, die vorzugsweise auf verschiedenen Seiten des Gehäuseblocks angeordnet sind. Die Deckel sind je nach Ausführungsform identisch oder unterschiedlich ausgebildet. Sie nehmen je nach Ausführungsform gleich ausgebildete Ventile oder unterschiedliche Ventile auf.

Indem der zweite Kanal teilweise im Deckel verläuft, lässt sich der erste Kanal relativ kurz ausbilden und der Gehäuseblock lässt sich kleiner ausbilden. Die Ventileinheit wird kompakter und benötigt weniger Platz in der Blaseinrichtung. Des Weiteren ist die Flexibilität für die Positionierung der Anschlussbohrung für den Zuführkanal erhöht.

Ist mindestens ein Teil des Ventilraums im Deckel angeordnet und umgibt er den beweglichen Kolben des Ventils, ist ebenfalls der Platzbedarf verringert und die Toträume minimiert. Der Gehäuseblock ist in diesem Fall vorzugsweise etwas grösser ausgebildet als in der ersten Variante. Dafür lässt sich der Deckel schmaler ausbilden als in der ersten Variante.

Vorzugsweise bildet eine innere Wandung des Deckels mindestens einen Teil der äusseren Begrenzung des Ventilraums.

In ersten bevorzugten Ausführungsformen fluchtet eine äussere Stirnfläche des Kolbens mit einer äusseren, den Kolben umgebenden Stirnfläche des Deckels. Vorzugsweise ist der Ventilraum annähernd vollständig oder sogar vollständig im Deckel ausgebildet. Diese Lösung verkürzt den ersten Kanal optimal.

In anderen bevorzugten Ausführungsformen steht eine äussere Stirnfläche des Kolbens einer äusseren, den Kolben umgebenden Stirnfläche des Deckels vor und ragt in eine Vertiefung des Gehäuseblocks hinein. Der zweite Kanal ist je nach Ausführungsform nach wie vor teilweise im Deckel angeordnet. In anderen Ausführungsformen verläuft er im Gehäuseblock, wobei ein Teil des Ventilraums im Deckel angeordnet ist.

Vorzugsweise verläuft der mindestens eine zweite Kanal teilweise im Deckel und teilweise im Gehäuseblock. Dies erlaubt sowohl eine Minimierung der Masse des Deckels wie auch des Gehäuseblocks.

Vorzugsweise verläuft der mindestens eine zweite Kanal mit seinem dem zugehörigen Ventil benachbarten Bereich im Deckel und mit seinem der zugehörigen externen Leitung benachbarten Bereich im Gehäuseblock.

Die Durchgangsbohrung im Gehäuseblock definiert üblicherweise eine Längsrichtung. Vorzugsweise ist der Kolben des Ventils bzw. sind die Kolben der Ventile in einer zur Längsrichtung senkrecht verlaufenden Richtung bewegbar. Dies ist eine bewährte Anordnung von Blas- und/oder Entlüftungsventilen. Sie ermöglicht einen optimalen Zugang für das Auswechseln der Ventile der bereits in Betrieb genommenen Ventileinheit.

Vorzugsweise sind mehrere Ventile in einem gemeinsamen Deckel angeordnet. Die Ventile sind vorzugsweise Blasventile und/oder Entlüftungsventile. Vorzugsweise sind die Ventile im mindestens einen Deckel vormontiert angeordnet und gemeinsam mit dem mindestens einen Deckel am Gehäuseblock befestigbar und/oder entfernbar. Dies erleichtert das Auswechseln und die Montage. Vorzugsweise lassen sie sich somit gemeinsam mit dem Deckel am Gehäuse lösbar befestigen.

In bevorzugten Ausführungsformen ist im Deckel ein innerer Führungszapfen ausgebildet, der in eine Zentralbohrung des Kolbens eingreift und der vorzugsweise von einer Steuerleitung zur Verbindung mit einem Pilotventil durchsetzt ist. Der Deckel bildet somit einen Teil der Führung des Kolbens. Der Deckel lässt sich dadurch platzsparend ausbilden.

Vorzugsweise ist der Kolben von einer äusseren Führungsschürze umgeben, die auf ihrer Innenseite eine umlaufende Stufe aufweist, welche gemeinsam mit einer nach aussen ragenden umlaufenden Stufe des Kolbens einen Steuerraum bildet. Der Kolben ist in dieser Schürze geführt gehalten. Vorzugsweise ist der Kolben mittels dieser Schürze im Deckel gehalten.

In bevorzugten Ausführungsformen ist die Führungsschürze im Deckel lösbar befestigbar und der Kolben ist mittels dieser Führungsschürze im Deckel bewegbar gehalten. Vorzugsweise ist sie mittels Schrauben lösbar befestigt.

Die Führungsschürze bildet vorzugsweise mit ihrer Aussenseite eine innere Begrenzung mindestens eines Teils des Ventilraums aus. Vorzugsweise verjüngt sich der Aussendurchmesser der Schürze konisch. Dies optimiert den Durchfluss des Prozessfluids durch das Ventil im offenen Zustand.

Die Verwendung einer Führungsschürze innerhalb eines Ventilgehäuses, die den Schaltkolben hält und führt und die mindestens teilweise eine innere Begrenzung mindestens eines Teils des Ventilraums bildet, ist eine eigenständige Erfindung und wird hiermit ohne die übrigen Merkmale ebenfalls beansprucht. Dies betrifft insbesondere derartige Führungsschürzen, die sich in ihrem Aussendurchmesser verjüngen, insbesondere konisch ausgebildet sind.

In einer bevorzugten Ausführungsform dichtet der Kolben auf einer Sitzdichtung ab. Diese ist vorzugweise mittels eines Niederhalters in einer ringförmigen Ausnehmung im Gehäuseblock gehalten. Vorzugsweise ist der Niederhalter mittels des Deckels auf die Sitzdichtung gepresst. Diese Anordnung ermöglicht einen einfachen Austausch der Sitzdichtung.

In bevorzugten Ausführungsformen weist der Gehäuseblock eine ringförmige Ausnehmung auf. Sie weist vorzugsweise einen grösseren Aussendurchmesser als der oberhalb der Ausnehmung angeordnete Kolben auf. In der ringförmigen Ausnehmung ist die Sitzdichtung in Form eines Dichtrings angeordnet, auf welchem der Kolben im geschlossenen Zustand des Ventils dichtend aufliegt.

Vorzugsweise ist in der ringförmigen Ausnehmung ein Niederhalter angeordnet, der den Dichtring in seiner Position fixiert. Dies erleichtert die Montage und auch das Auswechseln des Dichtrings. Zudem ist ein optimaler Verschluss des Ventils gewährleistet.

In bevorzugten Ausführungsformen ist der Niederhalter lediglich eingelegt und vom Deckel gehalten. In anderen Ausführungsformen ist er zusätzlich oder alternativ am Gehäuseblock befestigt, beispielsweise verschraubt.

Die Sitzdichtung und der Niederhalter sind somit nicht wie der restliche Teil des Ventils im Deckel vormontiert, sondern sie werden vor Montage des Deckels im Gehäuseblock eingelegt. Die Fixierung kann direkt am Gehäuseblock erfolgen und/oder mittels Befestigung des Deckels.

Die erfindungsgemässe Ventileinrichtung der oben beschriebenen Vorrichtung weist einen Deckel und mindestens einen im Deckel lösbar befestigten bewegbaren Kolben des mindestens einen Ventils auf. Die Ventileinrichtung ist als Einheit lösbar mit dem Gehäuseblock verbindbar.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine perspektivische Darstellung einer erfindungsgemässen Vorrichtung in einer ersten Ausführungsform;
- Figur 2: die Vorrichtung gemäss Figur 1 in einer zweiten perspektivischen Darstellung;
- Figur 3: eine teilweise Explosionsdarstellung der Vorrichtung gemäss Figur 1;
- Figur 4: eine weitere teilweise Explosionsdarstellung der Vorrichtung gemäss Figur 1;
- Figur 5: einen Querschnitt durch die Vorrichtung gemäss Figur 1;
- Figur 6: einen Querschnitt durch eine perspektivische Darstellung der Vorrichtung gemäss Figur 1;
- Figur 7: einen weiteren Querschnitt, der einen Teil der Vorrichtung gemäss Figur 1 zeigt;
- Figur 8: eine perspektivische Darstellung einer erfindungsgemässen Vorrichtung in einer zweiten Ausführungsform;
- Figur 9: eine teilweise Explosionsdarstellung der Vorrichtung gemäss Figur 8;
- Figur 10: eine weitere teilweise Explosionsdarstellung der Vorrichtung gemäss Figur 8;
- Figur 11: einen Querschnitt durch die Vorrichtung gemäss Figur 8;
- Figur 12: einen Querschnitt durch eine perspektivische Darstellung der Vorrichtung gemäss Figur 8 und
- Figur 13: einen weiteren Querschnitt, der einen Teil der Vorrichtung gemäss Figur 8 zeigt.

### BESCHREIBUNG BEVORZUGTER AUSFÜHRUNGSFORMEN

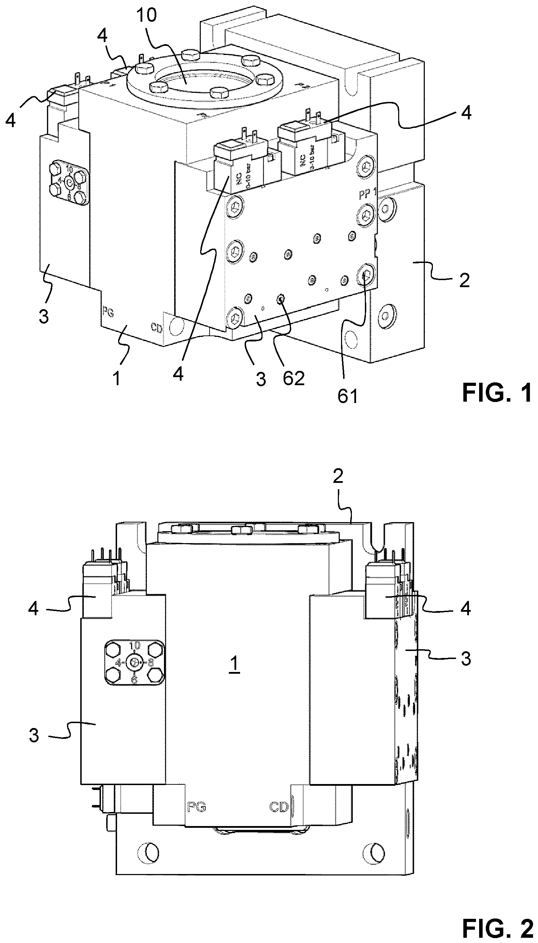

In den Figuren 1 bis 7 ist die erfindungsgemässe Vorrichtung in einer ersten Ausführungsform dargestellt.

Die Vorrichtung ist als Ventileinheit ausgebildet. Sie weist, wie in den Figuren 1 und 2 gut erkennbar ist, einen Gehäuseblock 1 auf, der von einer Durchgangsbohrung 10 durchsetzt ist. Diese Durchgangsbohrung 10 dient der Aufnahme einer Blasdüse der Blaseinrichtung, durch die wahlweise ein Reckdorn eingesteckt ist.

Der Gehäuseblock 1 ist an seiner Rückseite mit einem Haltekörper 2 verbunden, der zur Befestigung an einem Träger der Blaseinrichtung dient. Vorzugsweise ist der Haltekörper 2 als Schlitten ausgebildet. Er ermöglicht dadurch die Höhenverstellung der Ventileinheit.

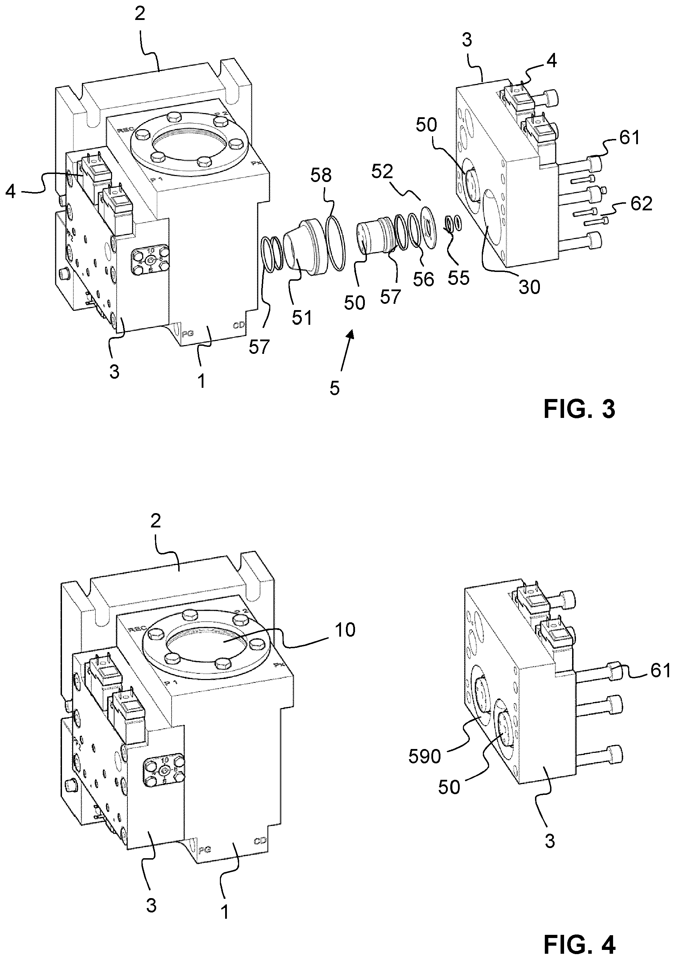

An mindestens einer, hier an zwei gegenüberliegenden Seiten des Gehäuseblocks 1 sind Ventileinrichtungen montiert. Jede Ventileinrichtung weist einen Deckel 3 auf, der Prozessventile 5 umschliesst. Dies ist in den Figuren 3 und 4 dargestellt. Vorzugsweise sind am Deckel 3 Pilotventile 4 zur Steuerung der Prozessventile 5 angeordnet.

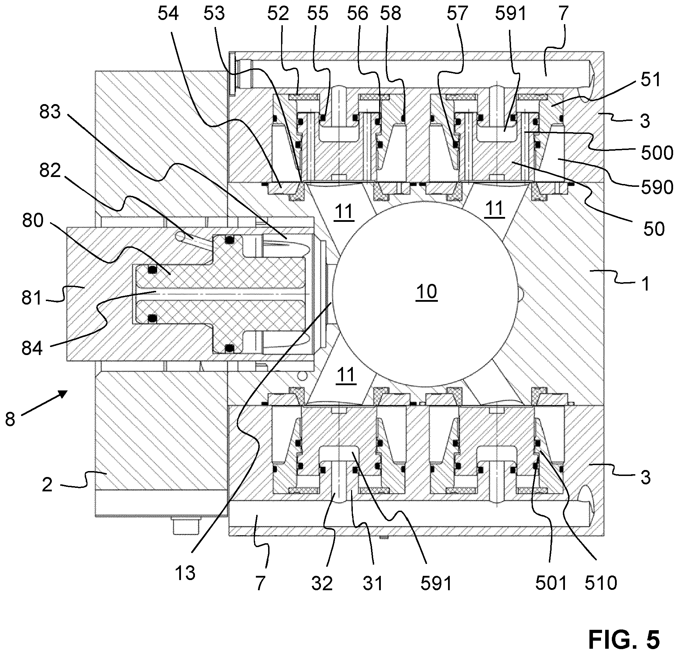

Der Deckel 3 weist der Anzahl der Ventile 5 entsprechende kreiszylinderförmige Ausnehmungen 30 auf, die Sacklöcher bilden. Der Boden des Sacklochs bildet vorzugsweise einen nach innen in die Ausnehmung 30 ragenden Führungszapfen 31 aus (Figur 5).

Die Ventile 5 sind von einer ersten Seite in diese Ausnehmungen 30 eingeschoben. Sie sind vorzugsweise am Deckel 3 lösbar befestigt, vorzugsweise von der gegenüberliegenden Seite mittels ersten Befestigungsschrauben 61.

Der Gehäuseblock 1 und/oder der Haltekörper 2 und/oder die Deckel 3 sind vorzugsweise als massive Bauteile ausgebildet, die, wo notwendig, mit Ausnehmungen, Bohrungen und Kanälen versehen sind.

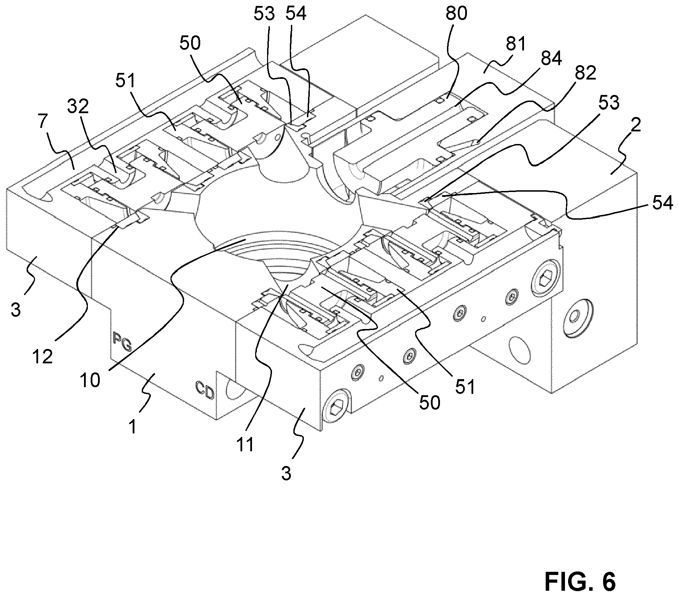

Wie in den Figuren 5 und 6 erkennbar ist, sind in diesem Beispiel in jedem Deckel 3 zwei Ventile 5 angeordnet. Es sind in diesem Beispiel Blasventile, beispielsweise Vorblas- und Hauptblasventile. Je nach Ausführungsform ist jedoch auch nur ein einziges oder es sind drei oder mehr Ventile in demselben Deckel 3 angeordnet. Die Ventile 5 sind vorzugsweise identisch ausgebildet. Sie können je nach Ausführungsbeispiel jedoch auch unterschiedlich sein.

Jedes Ventil 5 weist einen beweglichen Kolben 50 auf. Der Führungszapfen 31 greift in ein Sackloch des Kolbens 50 ein. Das Sackloch bildet einen ersten Steuerraum 591. Ein erster Dichtring, bzw. ein erstes Dichtringpaar 55, bildet eine dynamische Dichtung zwischen dem Führungszapfen 31 und dem relativ zu diesem verschiebbaren Kolben 50. Der Führungszapfen 31 ist mit einer Durchgangsbohrung 32 versehen, die in einen Steuerkanal 7 mündet. Über diesen Steuerkanal 7 lässt sich der erste Steuerraum 591 mit einem ersten Steuerdruck beaufschlagen.

Der Kolben 50 ist von einer Führungsschürze 51 umgeben. Die Schürze 51 ist vorzugsweise aus einem steifen Material gebildet, vorzugsweise aus Metall. Die Schürze 51 ist mittels der zweiten Schrauben 62 am Deckel 3 lösbar befestigt. Die Schürze 51 weist eine nach innen ragende umlaufende Stufe 510 auf, auf der der Kolben 50 mit einer nach aussen ragenden umlaufenden Stufe 501 aufliegt. Dadurch ist der Kolben 50 mittels der Schürze 51 im Deckel 3 verschiebbar gehalten. Zwischen den zwei Stufen 501, 510 ist ein zweiter Steuerraum ausgebildet. Er ist in den Figuren in seiner Grösse minimiert, da das Ventil im geschlossenen Zustand dargestellt ist. Der zweite Steuerraum ist über eine Steuerleitung mit dem zugehörigen Pilotventil 4 verbunden.

Ein zweiter Dichtring 56 und ein dritter Dichtring, bzw. ein zweites Dichtringpaar 57, bilden dynamische Dichtungen, die eine dichte Verschiebbarkeit des Kolbens 50 zur ortsfesten Schürze 51 ermöglichen. Die Schürze 51 ist an ihrem äusseren Umfang mittels eines vierten Dichtrings 58 gegenüber dem Deckel 3 gedichtet.

Vorzugsweise ist ein Anschlagring 52 vorhanden, der vorzugsweise aus einem weichen, flexiblen Material besteht. Er dient als Anschlag für den Kolben 50 im geöffneten Zustand des Ventils. Der Anschlagring 52 umgibt einen äusseren Umfang des Führungszapfens 31. Er ist vorzugsweise zwischen einer Stirnfläche der Schürze 51 und einer inneren Oberfläche des Deckels 3 eingeklemmt.

Die Schürze 51 ist vorzugsweise ein rotationssymmetrischer Körper mit einem hohlzylinderförmigen Abschnitt, der mit gleichbleibendem Innendurchmesser in eine sich verjüngende konische Form übergeht. Die Schürze 51 führt den Kolben 50. In den Figuren 5 und 6 sind die Ventile 5 im geschlossenen Zustand dargestellt. Der Kolben 50 überragt das freie konische Ende der Schürze 51.

Im Gehäuseblock 1 ist zu jedem Ventil 5 eine ringförmige Ausnehmung 12 vorhanden. Diese ist vorzugsweise im Durchmesser grösser als der äussere Durchmesser des Kolbens 50. In dieser ringförmigen Ausnehmung 12 ist eine Sitzdichtung 53 angeordnet. Die Sitzdichtung 53 ist vorzugweise aus einem weichen, elastischen Ringkörper gebildet. Die Sitzdichtung 53 ist vorzugsweise, wie hier dargestellt, mittels eines Niederhalters 54 in der Ausnehmung 12 fixiert gehalten. Der Niederhalter 54 ist vorzugsweise ein Ringkörper aus einem steifen Material. Er ist vorzugsweise mittels des Deckels 3 eingeklemmt und in seiner Position fixiert. Alternativ oder zusätzlich ist er mittels anderen Befestigungsmitteln am Gehäuseblock 1 fixiert. Beispielsweise ist er direkt am Gehäuseblock 1 angeschraubt.

Die ringförmige Ausnehmung 12 des Gehäuseblocks 1 umgibt einen ersten Kanal 11, der von der Durchgangsbohrung 10 zum Ventil 5 führt, genauer zu einem Ventilraum 590. Der Ventilraum 590 ist durch die innere Wandung der Ausnehmung 30 und dem äusseren Mantel der Schürze 51 begrenzt sowie durch den Kolben 50. Der erste Kanal 11 mündet in diesen Ventilraum 590 und verbindet diesen somit mit der Durchgangsbohrung 10 und der Blasdüse der Blaseinrichtung. Mindestens eine durch den Kolben 50 verlaufende Druckausgleichsbohrung verbindet den Ventilraum 590 mit einem zweiten Ventilraum 591.

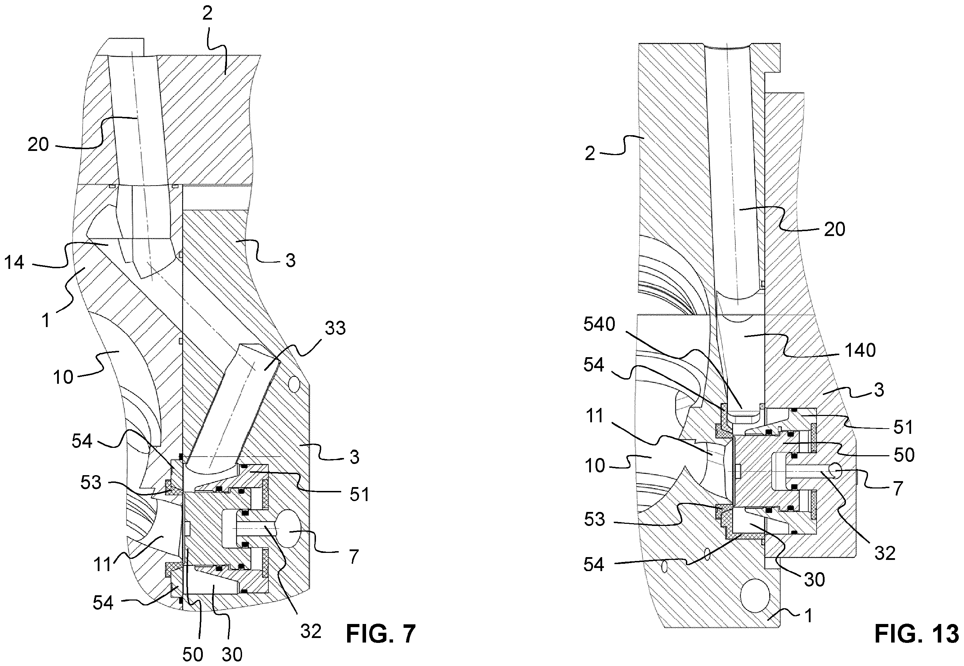

Ein zweiter Kanal verbindet diesen Ventilraum 590 mit den Zuführungsleitungen, die das Prozessgas, vorzugsweise Luft, in die Blaseinrichtung leiten. Die hier nicht dargestellten Zuführungsleitungen münden in diesem Beispiel in einen Zuführungskanal 20 des Haltekörpers 2. Dies ist in den Figuren 6 und 7 erkennbar. Der Zuführungskanal 20 mündet in einen ersten Teil 14 des zweiten Kanals, wobei der erste Teil 14 im Gehäuseblock 1 verläuft. Der erste Teil 14 mündet in einen zweiten Teil 33 des zweiten Kanals, wobei der zweite Teil 33 im Deckel 3 verläuft und in den Ventilraum 590 des Ventils 5 mündet. Jedes Ventil hat vorzugsweise eine eigene Leitungskombination mit Zuführungskanal 20 und zweitem Kanal 14, 33.

Bei geschlossenem Ventil 5 liegt der Kolben 50 auf der Sitzdichtung 53 auf und verschliesst somit den ersten Kanal 11. Er unterbricht somit die Verbindung zwischen dem ersten Kanal 11 und dem zweiten Kanal, genauer dem zweiten Teil 33 des zweiten Kanals. Im offenen Zustand des Ventils 5 liegt der Kolben 50 am Anschlagring 52 an. Ein Durchgang zwischen freiem Ende der Schürze 51 und der Sitzdichtung 53 ist freigegeben und die zwei Kanäle sind miteinander über den Ventilraum 590 verbunden. Das Prozessventil lässt sich mittels des Pilotventils 4, genauer mittels der Steuerdrücke in den Steuerräumen, steuern. Dies insbesondere, wenn der Kolben bezüglich des Prozessdrucks druckausgeglichen ausgebildet ist.

In diesem Ausführungsbeispiel umfasst die Vorrichtung mindestens ein weiteres Ventil, das als Entlüftungsventil 8 dient. Es ist in diesem Beispiel auf der Rückseite der Vorrichtung angeordnet. Es kann jedoch auch an einer anderen Stelle des Gehäuseblocks 1 angeordnet sein.

Das Entlüftungsventil 8 durchsetzt eine Ausnehmung des Haltekörpers 2 und ragt vorzugsweise in eine Ausnehmung des Gehäuseblocks 1 hinein.

Das Entlüftungsventil 8 weist wiederum einen bewegbaren Kolben 80 auf, der in einem Deckel 81 geführt gehalten ist. Der Deckel 81 ist vorzugsweise am Gehäuseblock 1 oder am Haltekörper 2 lösbar befestigt, vorzugsweise angeschraubt.

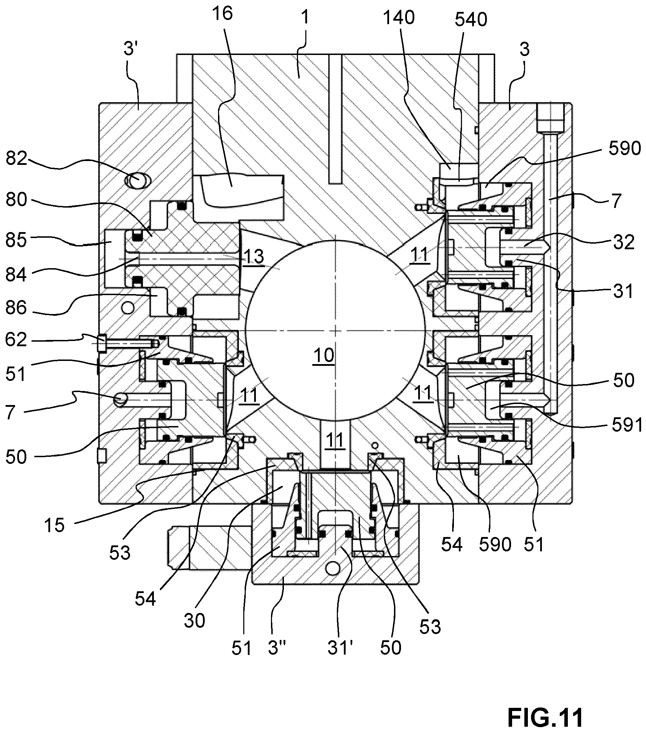

Der Gehäuseblock 1 weist einen Entlüftungskanal 13 auf, der zu einem Ventilraum 83 des Entlüftungsventils 8 führt. Das Entlüftungsventil 8 ist in den Figuren im offenen Zustand dargestellt. Eine Druckausgleichsbohrung 84 und ein Druckausgleichsraum 85 (Figur 11) erleichtern das Zuhalten des Entlüftungsventils 8.

Vorzugsweise ist auch das Entlüftungsventil mittels eines hier nicht dargestellten Pilotventils gesteuert. Ein Steuerkanal 82 führt zum Kolben 80. Ein Steuerraum 86 des Entlüftungsventils ist in Figur 11 erkennbar.

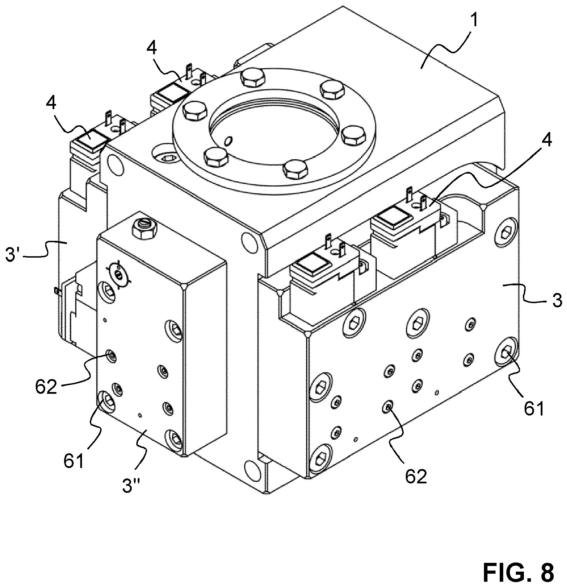

In den Figuren 8 bis 13 ist eine zweite Ausführungsform dargestellt. Sie ist ähnlich aufgebaut wie die erste Ausführungsform. Die obige Beschreibung ist somit auch auf die zweite Ausführungsform zutreffend, wo nachfolgend keine Änderung angegeben ist.

In Figur 8 ist die Ventileinheit dargestellt. Der Haltekörper 2 in Form eines Verbindungsflansches ist hier nicht gezeigt. Er ist jedoch ebenfalls auf der Rückseite des Gehäuseblocks 1 vorhanden oder er ist einstückig mit dem Gehäuseblock 1 ausgebildet.

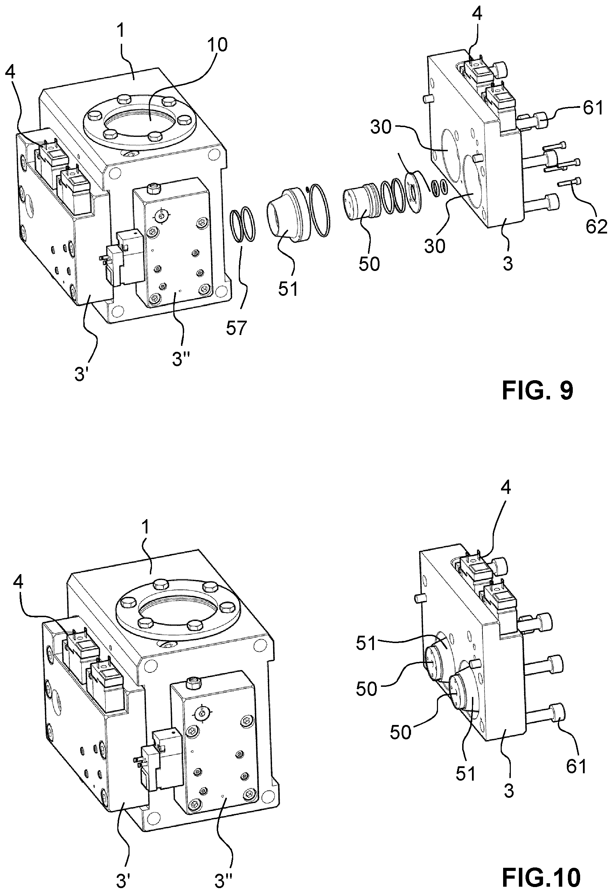

Wie in den Figuren 9 und 10 dargestellt, ist der Deckel 3 vorzugsweise schmaler ausgebildet als im ersten Ausführungsbeispiel. Der Gehäuseblock 1 ist vorzugsweise breiter als im ersten Ausführungsbeispiel.

Wie ebenfalls in den Figuren 9 und 10 erkennbar ist, weist das Ventil 5 dieselben im Deckel 3 aufgenommenen Teile auf wie im ersten Ausführungsbeispiel. Diese Teile sind jedoch nicht, wie in Figur 4 erkennbar, vollständig in der Ausnehmung 30 des Deckels 3 aufgenommen. Sie stehen vielmehr teilweise einer äusseren Oberfläche des Deckels 3 vor.

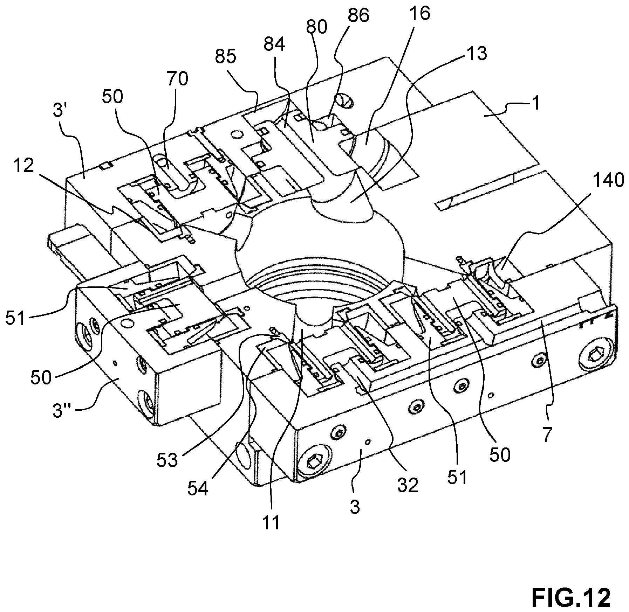

In den Figuren 11 und 12 ist erkennbar, dass die Blasventile 5 gleich ausgebildet sind wie im ersten Ausführungsbeispiel. Der Führungszapfen 31, 31' des Deckels 3, 3', 3" ragt wiederum in den Steuerraum des Ventils 5 hinein und führt den Kolben 50. Der Kolben 50 ist ferner von der Schürze 51 umgeben und geführt. Die Schürze 51 weist dieselbe Form auf wie im ersten Ausführungsbeispiel. Im Deckel 3 ist der Steuerkanal 7 zur Verbindung mit den Pilotventilen 4 vorhanden. Der Deckel 3 trägt je nach Ausführungsform ein Ventil, zwei Ventile oder drei oder mehr Ventile.

Der Gehäuseblock 1 weist passend zu jedem Ventil 5 eine vorzugsweise zylinderförmige Vertiefung 15 auf. Im Grund dieser Vertiefung 15 ist jeweils die ringförmige Ausnehmung 12 angeordnet. In der ringförmigen Ausnehmung 12 befinden sich die ringförmige Sitzdichtung 53 und der Niederhalter 54. Der Niederhalter 54 weist vorzugsweise im Gegensatz zum ersten Ausführungsbeispiel einen umlaufenden Mantel auf, der auf der Innenseite der Vertiefung 15 anliegt und vom montierten Deckel 3 lösbar fixiert ist. Alternativ oder zusätzlich lässt sich der Niederhalter 54 in der Vertiefung 15 direkt lösbar befestigen, beispielsweise mittels Schrauben.

Die Ventile 5 sind im geschlossenen Zustand dargestellt. Sie liegen auf der Sitzdichtung 53 auf. Dabei ragen sie in die Vertiefung 15 des Gehäuseblocks 1 hinein. Je nach Grösse der Vertiefung ragt das freie Ende der Schürze 51 mehr oder weniger oder gar nicht in die Vertiefung 15 hinein.

Im Deckel 3 ist kein Kanal für das Prozessgas angeordnet. Der zweite Kanal verläuft ausschliesslich im Gehäuseblock 1 und hat keinen Anteil im Deckel 3. Er ist in den Figuren mit dem Bezugszeichen 140 versehen. Nach wie vor ist jedoch ein Teil des Ventilraums 590 im Deckel 3 angeordnet, wie in den Figuren 11 und 12 gut erkennbar ist. Der Niederhalter 54 weist eine Durchgangsöffnung 540 auf, durch welche der zweite Kanal 140 in den Ventilraum 590 mündet. Sie ist in den Figuren 11 und 12 im rechten Deckel 3 im oberen Ventil 5 zu sehen. Die Durchgangsöffnungen der übrigen Niederhalter 54 sind nicht sichtbar.

Der Deckel 3' auf der gegenüberliegenden linken Seite in den Figuren 11 und 12 ist nicht wie im ersten Ausführungsbeispiel identisch ausgebildet. Er beherbergt vielmehr ein Blasventil 5 und ein Entlüftungsventil 8. Das Blasventil 5 ist gleich ausgebildet wie die bereits beschriebenen. Das Entlüftungsventil 8 entspricht im Grundaufbau dem ebenfalls bereits beschriebenen. Es weist jedoch keinen eigenen Deckel auf, sondern teilt den Deckel 3' mit dem daneben angeordneten Blasventil 5. Die Entlüftungsleitung 16 verläuft ausschliesslich im Gehäuseblock 1. Der Steuerkanal 82 des Entlüftungsventils 8 ist im Deckel 3' angeordnet. Die Steuerleitung 7 für das Blasventil 5 ist ebenfalls vorhanden. Bei diesem Ventil 5 ist zudem die zweite Befestigungsschraube 62 zur Befestigung der Schürze 51 und somit des Kolbens 50 im Deckel sichtbar.

Ein weiteres, hier ein viertes Blasventil ist in diesem Beispiel an einer vorderen Seite des Gehäuseblock 1 in einem eigenen Deckel 3" angeordnet. Dieses weitere Blasventil 5 ist vorzugsweise gleich ausgebildet wie die übrigen Blasventile. Üblicherweise werden insgesamt vier Blasventile 5 verwendet, wie vorzugsweise identisch ausgebildet sind.

In Figur 13 ist erkennbar, wie der zweite Kanal 140 vollständig im Gehäuseblock 1 verläuft und in den Zuführungskanal 20 des Haltekörpers 2 übergeht. Der zweite Kanal 140 mündet in den Ventilraum 590.

In den Figuren sind bei einigen der Ventile die Druckausgleichsbohrungen 500 und die Durchgangsbohrung 32 nicht erkennbar. Des Weiteren führt der zweite Kanal bzw. führen die zweiten Kanäle 140 auch zu diesen Ventilen 5, sie sind in den Figuren jedoch nicht alle sichtbar. Dies liegt teilweise an den gewählten Schnittebenen. Sie sind jedoch üblicherweise vorhanden.

Die erfindungsgemässe Vorrichtung lässt sich kompakt und in der Grösse minimiert ausbilden, wobei die Ventile einfach und schnell montierbar und auswechselbar sind. Sie sind ferner gut zugänglich.

**BEZUGSZEICHENLISTE**

| | | | |
|---|---|---|---|
| 1 | Gehäuseblock | 500 | Druckausgleichsbohrung |
| 10 | Durchgangsbohrung | 501 | Stufe |
| 11 | erster Kanal | 51 | Führungsschürze |
| 12 | ringförmige Ausnehmung | 510 | Stufe |
| 13 | Entlüftungskanal | 52 | Anschlagring |
| 14 | erster Teil des zweiten | 53 | Sitzdichtung |
| | Kanals | 54 | Niederhalter |
| 140 | zweiter Kanal | 540 | Durchgangsöffnung |
| 15 | Vertiefung | 55 | erstes Dichtringpaar |
| 16 | Entlüftungsleitung | 56 | zweiter Dichtring |
| | | 57 | drittersDichtringpaar |
| 2 | Haltekörper | 58 | vierter Dichtring |
| 20 | Zuführkanal | 590 | Ventilraum |
| | | 591 | Steuerraum |
| 3 | Deckel | | |
| 3' | Deckel | 61 | erste Befestigungsschraube |
| 3" | Deckel | 62 | zweite Befestigungsschraube |
| 30 | Hohlraum | | |
| 31 | Führungszapfen | 7 | Steuerkanal |
| 31' | Führungszapfen | | |
| 32 | Durchgangsbohrung | 8 | Entlüftungsventil |
| 33 | zweiter Teil des zweiten Kanals | 80 | Kolben |
| | | 81 | Deckel |
| | | 82 | Steuerkanal |
| 4 | Pilotventil | 83 | Ventilraum |
| | | 84 | Druckausgleichsbohrung |
| 5 | Prozessventil | 85 | Druckausgleichsraum |
| 50 | Kolben | 86 | Steuerraum |

## Patentansprüche

1. Vorrichtung einer Blaseinrichtung zur Formung von Hohlkörpern, insbesondere einer Streckblasmaschine, wobei die Vorrichtung aufweist:
- einen Gehäuseblock (1) mit einer Durchgangsbohrung (10) zur mindestens teilweisen Aufnahme einer mit dem Hohlkörper verbindbaren Blasdüse der Blaseinrichtung,
- mindestens ein Ventil (5) mit einem bewegbaren Kolben (50) und mit einem Ventilraum (590),
- einen ersten Kanal (11), der im Gehäuseblock (1) verläuft und der den Ventilraum (590) mit der Durchgangsbohrung (10) verbindet,
- einen zweiten Kanal (14, 33; 140), der den Ventilraum (590) mit einer externen Leitung verbindet und
- einen Deckel (3, 3', 3") zur Befestigung des Ventils (5) am Gehäuseblock (1), wobei das Ventil (5) den ersten Kanal (11) und den zweiten Kanal (14, 33; 140) miteinander verbindet und sie voneinander trennt,
**dadurch gekennzeichnet, dass**
der zweite Kanal (14, 33) mindestens teilweise im Deckel (3) verläuft und/oder dass mindestens ein Teil des Ventilraums (590) im Deckel (3, 3', 3") angeordnet ist und den Kolben (50) umgibt.

2. Vorrichtung nach Anspruch 1, wobei eine äussere Stirnfläche des Kolbens (50) mit einer äusseren, den Kolben (50) umgebenden Stirnfläche des Deckels (3) fluchtet.

3. Vorrichtung nach Anspruch 1, wobei eine äussere Stirnfläche des Kolbens (50) einer äusseren, den Kolben (50) umgebenden Stirnfläche des Deckels (3, 3', 3") vorsteht und in eine Vertiefung (15) des Gehäuseblocks (1) hineinragt.

4. Vorrichtung nach einem der Ansprüche 1 bis 3, wobei der zweite Kanal (14, 33) teilweise im Deckel (3) und teilweise im Gehäuseblock (1) verläuft.

5. Vorrichtung nach Anspruch 4, wobei der zweite Kanal (14, 33) mit seinem dem Ventil (5) benachbarten Bereich (33) im Deckel (3) und mit seinem der externen Leitung benachbarten Bereich (14) im Gehäuseblock (1) verläuft.

6. Vorrichtung nach einem der Ansprüche 1 bis 5, wobei die Durchgangbohrung (10) eine Längsrichtung definiert und wobei der Kolben (50) in einer zur Längsrichtung senkrecht verlaufenden Richtung bewegbar ist.

7. Vorrichtung nach einem der Ansprüche 1 bis 6, wobei zwei oder mehr Ventile (5) vorhanden sind und wobei mindestens zwei dieser Ventile (5) in einem gemeinsamen Deckel (3, 3',) angeordnet sind.

8. Vorrichtung nach einem der Ansprüche 1 bis 7, wobei das mindestens eine Ventil (5) im mindestens einen Deckel (3, 3', 3") vormontiert angeordnet ist und gemeinsam mit dem Deckel (3, 3', 3") am Gehäuseblock (1) befestigbar und/oder entfernbar ist.

9. Vorrichtung nach einem der Ansprüche 1 bis 8, wobei im Deckel (3, 3', 3") ein innerer Führungszapfen (31, 31') ausgebildet ist, der in eine Zentralbohrung des Kolbens (50) eingreift und der von einer Steuerleitung (7) zur Verbindung mit einem Pilotventil (4) durchsetzt ist.

10. Vorrichtung nach einem der Ansprüche 1 bis 9, wobei der Kolben (50) von einer äusseren Führungsschürze (51) umgeben ist, die den Kolben (50) hält und die mindestens teilweise eine innere Begrenzung mindestens eines Teils des Ventilraums bildet.

11. Vorrichtung nach Anspruch 10, wobei die Führungsschürze (51) im Deckel (3, 3', 3") lösbar befestigbar ist und wobei der Kolben (50) mittels dieser Führungsschürze (51) im Deckel (3, 3', 3") bewegbar gehalten ist.

12. Vorrichtung nach einem der Ansprüche 1 bis 12, wobei der Gehäuseblock (1) eine ringförmige Ausnehmung (12) aufweist, die einen grösseren Aussendurchmesser als ein oberhalb der ringförmigen Ausnehmung (12) angeordneter Kolben (50) des Ventils (5) aufweist und wobei in der Ausnehmung (12) ein Dichtring (53) angeordnet ist, auf welchem der Kolben (50) im geschlossenen Zustand des Ventils (5) dichtend aufliegt.

13. Vorrichtung nach Anspruch 12, wobei in der ringförmigen Ausnehmung (12) ein Niederhalter (54) angeordnet ist, der den Dichtring (53) in seiner Position fixiert.

14. Vorrichtung nach Anspruch 13, wobei der Niederhalter (54) mittels des Deckels (3, 3', 3") in seiner Position gehalten ist.

15. Ventileinheit einer Vorrichtung gemäss einem der Ansprüche 1 bis 14, wobei die Ventileinheit einen Deckel (3, 3', 3") und mindestens einen im Deckel (3, 3', 3") lösbar befestigten bewegbaren Kolben (50) des mindestens einen Ventils (5) aufweist und wobei die Ventileinheit als Einheit lösbar mit dem Gehäuseblock (1) verbindbar ist.

## Claims

1. Device of a blow-moulding apparatus for moulding hollow bodies, in particular a stretch blow-moulding machine, wherein the device comprises:
- a housing block (1) with a through-bore (10) for at least partially receiving a blowing nozzle of the blow-moulding apparatus which may be connected to the hollow body,
- at least one valve (5) with a movable piston (50) and with a valve chamber (590),
- a first channel (11) which runs in the housing block (1) and which connects the valve chamber (590) to the through-bore (10),
- a second channel (14, 33; 140) which connects the valve chamber (590) to an external line and
- a cover (3, 3', 3") for fastening the valve (5) to the housing block (1),
wherein the valve (5) connects the first channel (11) and the second channel (14, 33; 140) to one another and separates them from one another,
**characterized in that**
the second channel (14, 33) runs at least partially in the cover (3) and/or that at least one part of the valve chamber (590) is arranged in the cover (3, 3', 3") and surrounds the piston (50).

2. Device according to Claim 1, wherein an outer front face of the piston (50) is aligned with an outer front face of the cover (3) surrounding the piston (50).

3. Device according to Claim 1, wherein an outer front face of the piston (50) protrudes over an outer front face of the cover (3, 3', 3") surrounding the piston (50) and protrudes into a recess (15) of the housing block (1).

4. Device according to one of Claims 1 to 3, wherein the second channel (14, 33) runs partially in the cover (3) and partially in the housing block (1).

5. Device according to Claim 4, wherein the second channel (14, 33) runs with its region (33) adjacent to the valve (5) in the cover (3) and runs with its region (14) adjacent to the external line in the housing block (1).

6. Device according to one of Claims 1 to 5, wherein the through-bore (10) defines a longitudinal direction and wherein the piston (50) is movable in a direction running perpendicular to the longitudinal direction.

7. Device according to one of Claims 1 to 6, wherein two or more valves (5) are present and wherein at least two of these valves (5) are arranged in a common cover (3, 3').

8. Device according to one of Claims 1 to 7, wherein the at least one valve (5) is arranged preassembled in the at least one cover (3, 3', 3"), and together with the cover (3, 3', 3") may be fastened to and/or removed from the housing block (1).

9. Device according to one of Claims 1 to 8, wherein an inner guide pin (31, 31'), which engages in a central bore of the piston (50) and which is penetrated by a control line (7) for connecting to a pilot valve (4), is configured in the cover (3, 3', 3").

10. Device according to one of Claims 1 to 9, wherein the piston (50) is surrounded by an outer guide apron (51) which holds the piston (50) and which at least partially forms an inner boundary of at least one part of the valve chamber.

11. Device according to Claim 10, wherein the guide apron (51) may be releasably fastened in the cover (3, 3', 3") and wherein the piston (50) is movably held in the cover (3, 3', 3") by means of this guide apron (51).

12. Device according to one of Claims 1 to 12, wherein the housing block (1) has an annular aperture (12) which has a larger external diameter than a piston (50) of the valve (5) arranged above the annular aperture (12), and wherein a sealing ring (53) is arranged in the aperture (12), the piston (50) in the closed state of the valve (5) sealingly bearing against said sealing ring.

13. Device according to Claim 12, wherein a hold-down device (54) which fixes the sealing ring (53) in its position is arranged in the annular aperture (12).

14. Device according to Claim 13, wherein the hold-down device (54) is held in its position by means of the cover (3, 3', 3").

15. Valve unit of a device according to one of Claims 1 to 14, wherein the valve unit has a cover (3, 3', 3") and at least one movable piston (50) of the at last one valve (5) which is releasably fastened in the cover (3, 3', 3"), and wherein the valve unit is releasably connectable to the housing block (1) as a unit.

## Revendications

1. Dispositif d'un système de soufflage pour le formage de corps creux, en particulier une machine d'étirage-soufflage, le dispositif présentant :
- un bloc (1) formant boîtier comprenant un alésage traversant (10) pour recevoir au moins partiellement une buse de soufflage du système de soufflage apte à être reliée au corps creux,
- au moins une vanne (5) à un piston mobile (50) et avec une chambre de vanne (590),
- un premier canal (11) qui s'étend dans le bloc (1) formant boîtier et qui relie la chambre de vanne (590) à l'alésage traversant (10),
- un deuxième canal (14, 33 ; 140) qui relie la chambre de vanne (590) à une conduite externe, et
- un couvercle (3, 3', 3") pour la fixation de la vanne (5) sur le bloc (1) formant boîtier,
la vanne (5) reliant le premier canal (11) et le deuxième canal (14, 33 ; 140) l'un à l'autre et les séparant l'un de l'autre,
**caractérisé en ce que**
le deuxième canal (14, 33) s'étend au moins partiellement dans le couvercle (3) et/ou **en ce qu'**au moins une partie de la chambre de vanne (590) est agencée dans le couvercle (3, 3', 3") et entoure le piston (50).

2. Dispositif selon la revendication 1, dans lequel une surface frontale extérieure du piston (50) est alignée avec une surface frontale extérieure du couvercle (3) entourant le piston (50).

3. Dispositif selon la revendication 1, dans lequel une face frontale extérieure du piston (50) fait saillie d'une face frontale extérieure du couvercle (3, 3', 3") entourant le piston (50) et pénètre dans un renfoncement (15) du bloc (1) formant boîtier.

4. Dispositif selon l'une des revendications 1 à 3, dans lequel le deuxième canal (14, 33) s'étend en partie dans le couvercle (3) et en partie dans le bloc (1) formant boîtier.

5. Dispositif selon la revendication 4, dans lequel le deuxième canal (14, 33) s'étend dans le couvercle (3) par sa zone (33) adjacente à la vanne (5) et dans le bloc (1) formant boîtier par sa zone (14) adjacente à la conduite externe.

6. Dispositif selon l'une des revendications 1 à 5, dans lequel l'alésage traversant (10) définit une direction longitudinale et dans lequel le piston (50) est mobile dans une direction perpendiculaire à la direction longitudinale.

7. Dispositif selon l'une des revendications 1 à 6, dans lequel il y a deux ou plusieurs vannes (5) et dans lequel au moins deux de ces vannes (5) sont agencées dans un couvercle commun (3, 3',).

8. Dispositif selon l'une des revendications 1 à 7, dans lequel ladite au moins une vanne (5) est agencée de façon prémontée dans ledit au moins un couvercle (3, 3', 3") et est apte à être fixée au bloc (1) formant boîtier conjointement avec le couvercle (3, 3', 3"), et/ou à être retirée de ce bloc.

9. Dispositif selon l'une des revendications 1 à 8, dans lequel un pion de guidage intérieur (31, 31') est formé dans le couvercle (3, 3', 3"), qui s'engage dans un alésage central du piston (50) et qui est traversé par une conduite de commande (7) pour le raccordement à une vanne de pilotage (4).

10. Dispositif selon l'une des revendications 1 à 9, dans lequel le piston (50) est entouré d'une jupe extérieure de guidage (51) qui maintient le piston (50) et qui forme au moins partiellement une délimitation intérieure d'au moins une partie de la chambre de vanne.

11. Dispositif selon la revendication 10, dans lequel la jupe de guidage (51) est apte à être fixée de manière amovible dans le couvercle (3, 3', 3") et dans lequel le piston (50) est mobile dans le couvercle (3, 3', 3") au moyen de cette jupe de guidage (51).

12. Dispositif selon l'une des revendications 1 à 12, dans lequel le bloc (1) formant boîtier présente un évidement annulaire (12) qui présente un diamètre extérieur supérieur à celui d'un piston (50) de la vanne (5) disposé au-dessus de l'évidement annulaire (12), et dans lequel un anneau d'étanchéité (53) est disposé dans l'évidement (12), sur lequel le piston (50) repose de manière étanche lorsque la vanne (5) est fermée.

13. Dispositif selon la revendication 12, dans lequel un dispositif de retenue (54) est disposé dans l'évidement annulaire (12), lequel fixe la bague d'étanchéité (53) dans sa position.

14. Dispositif selon la revendication 13, dans lequel le dispositif de retenue (54) est maintenu dans sa position au moyen du couvercle (3, 3', 3").

15. Unité formant vanne d'un dispositif selon l'une des revendications 1 à 14, dans lequel l'unité formant vanne présente un couvercle (3, 3', 3") et au moins un piston mobile (50) de ladite au moins une vanne (5) fixé de manière amovible dans le couvercle (3, 3', 3"), et l'unité formant vanne étant apte à être reliée de manière amovible au bloc (1) formant boîtier en tant qu'unité.
